# EUROPÄISCHE PATENTSCHRIFT

(11) **EP 2 792 647 B1**
(45) Veröffentlichungstag und Bekanntmachung des Hinweises auf die Patenterteilung: **22.06.2016**
(21) Anmeldenummer: 14164599.4
(22) Anmeldetag: 14.04.2014
(51) Int. Cl.: C02F 5/08, C02F 1/66, C02F 1/00, C02F 103/02

(54) **Verfahren zum Vermeiden von Ablagerungen in Kühlwasserkreisläufen**
Method for preventing deposits in cooling water circuits
Procédé destiné à éviter les dépôts dans les circuits d'eau de refroidissement

(30) Priorität: 16.04.2013 DE 102013006504
(43) Veröffentlichungstag der Anmeldung: 22.10.2014
(73) Patentinhaber: Messer Group GmbH, 65812 Bad Soden (DE); Messer Ibérica S.A., 43080 Tarragona (ES)
(72) Erfinder: Hermans, Dr. Monica, 41470 Neuss (DE); Torcal, Marcos, 43080 Tarragona (ES); Bachleitner, Walter, 4600 Wels (AT)
(74) Vertreter: Münzel, Joachim R.

(56) Entgegenhaltungen:
- FR-A1- 2 801 300
- US-A1- 2008 023 409
- US-A1- 2013 026 105

## Beschreibung

Die vorliegende Erfindung betrifft ein Verfahren zum Vermeiden von Ablagerungen in Kühlwasserkreisläufen, bei denen Kühlwasser aus einem Prozesswärmetauscher einem Kühlturm zugeführt, dort in Kontakt mit Umgebungsluft gekühlt wird und in ein Auffangbecken abtropft und anschließend dem Prozesswärmetauscher wieder zugeführt wird, wobei der pH-Wert des Kühlwassers laufend oder in regelmäßigen Zeitabständen an einer ersten Messstelle erfasst und in Abhängigkeit von der Differenz zwischen dem an der ersten Messstelle erfassten pH-Wert und einem vorgegebenen ersten Sollwert dem Kühlwasser Kohlendioxid zugeführt wird, wobei die Zuführung des Kohlendioxids stromauf zum Prozesswärmetauscher, jedoch stromab zum Kühlturm und die Erfassung des pH-Werts an der ersten Messstelle stromab zum Prozesswärmetauscher, jedoch stromauf zum Kühlturm erfolgt.

Beim Betrieb offener Kühlsysteme kommt es zur Bildung mineralischer Ablagerungen, die beispielsweise aus Kalk, Calciumsulfat, Calciumphosphat, Magnesiumhydroxid, Magnesiumsilikat, Magnesiumkarbonat oder Eisen- oder Siliziumverbindungen bestehen. Derartige Ablagerungen fällen während des Betriebs aus dem Kühlwasser aus und haften sich an den Leitungen des Kühlsystems und der Packung des Kühlturms an. Zum Beseitigen dieser Ablagerungen ist ein erheblicher Reinigungsaufwand erforderlich; vielfach müssen ganze Leitungsabschnitte ausgetauscht werden.

Es wurde und wird daher versucht, durch eine Beeinflussung der chemischen Zusammensetzung des Kühlwassers der Bildung derartiger Ablagerungen entgegenzuwirken.

Ein wesentlicher Faktor stellt dabei der pH-Wert des Kühlwassers dar. Übersteigt dieser einen Wert von pH=8,3, steigt die Konzentration von CO₃ - Ionen stark an, was die Bildung von Kalkablagerungen begünstigt. Unterschreitet dagegen der pH-Wert den Wert pH=4,3 sinkt die Konzentration von HCO₃-Ionen, wodurch sich die Gefahr der Korrosion von Leitungen und anderen Teilen des Kühlwasserkreislaufs erhöht.

Zur pH-Regulierung bietet sich zunächst die Zugabe mineralischer Säuren, wie beispielsweise HCl oder H₂SO₄ an. Der Einsatz von mineralischen Säuren ist jedoch nicht unproblematisch, da ihre Handhabung nicht ungefährlich ist und sie überdies Korrosionen an den Kreislaufleitungen verursachen können. Außerdem sind bei zu nehmender Eindickung die erhöhten Salzkonzentrationen im Absalzwasser (=Abflut) oft problematisch und relevant für behördliche Genehmigungen.

Bewährt hat sich dagegen der Einsatz von Kohlendioxid zur pH-Regulierung in Kühlwasserkreisläufen. In Abwesenheit von Wasser ist Kohlendioxid inert und nichtkorrosiv. Im Gegensatz zu mineralischen Säuren ist es sicher in der Handhabung, umweltfreundlich, einfach in der Dosierung und schützt den Kühlwasserkreislauf gegen Übersäuerung. Bei Einsatz von CO₂ in Kühlwasserkreisläufen nimmt auch bei höheren Eindickungen der Salzgehalt nicht überproportional zu und die Alkalinität im Wasser bleibt erhalten oder wird sogar leicht erhöht; beide Aspekte sind wichtig für günstige korrosionschemische Eigenschaften des Kühlwassers. Beispiele für Systeme, die mit Kohlendioxid arbeiten, finden sich etwa in der US 4 547 294 A1 und in der FR 2 801 300 A1. Dort werden Verfahren zum Verhindern von mineralischen Ablagerungen, wie Kesselstein, etc. in Kühlkreisläufen beschrieben, bei denen dem Kühlwasser Kohlendioxid zur Regelung des pH-Werts zugegeben wird. Mit den dort beschriebenen Verfahren soll der pH-Wert im gesamten Kühlwasserkreislauf auf pH ≈ 7,5, bzw. zwischen pH = 7,9 und pH = 8,4 gehalten werden.

In der EP 2 213 630 A1 oder der US 2013 0 026 105 A1 werden ebenfalls Verfahren zum Verhindern der Bildung von Ablagerungen in Kühlkreisläufen beschrieben. Dabei werden verschiedene, für die Bildung von Ablagerungen relevante Parameter, wie pH-Wert, Alkalinität, Konzentration von Ca²⁺-Ionen etc. gemessen und zur Berechnung eines Sollwertes für den pH-Wert herangezogen, wobei spezifische Härteindices, wie beispielsweise der Langelier-Sättigungsindex (LSI) oder der Ryznar Stabilitätsindex (RSI) berücksichtigt werden. Mittels der geregelten Zugabe von Kohlendioxid in den Kühlwasserkreislauf wird der pH-Wert des Kühlwassers anschließend auf den errechneten Sollwert gebracht.

Mit Kohlendioxid kann der pH-Wert des Kühlwassers in den Leitungen des Kühlwasserkreislaufs gut reguliert werden; jedoch wird das Kohlendioxid beim Kontakt mit Luft im Kühlturm zu einem nicht unwesentlichen Teil aus dem Kühlwasser abgezogen und mit der Kühlluft aus dem Kühlwasserkreislauf entfernt ("CO₂-Stripping"). Dadurch steigt zugleich der pH-Wert des Kühlwassers in einem dem Kühlturm nachgeschalteten Auffangbecken. Es besteht somit eine beträchtliche Differenz zwischen dem pH-Wert des dem Kühlturm zugeführten Kühlwassers und dem wesentlich höheren pH-Wert des Kühlwassers im Auffangbecken, mit der Folge, dass im Kühlturm und den sich an daran anschließenden Leitungsabschnitten des Kühlwasserkreislaufs die Gefahr der Bildung von Kalk- und sonstigen Ablagerungen steigt. Der Umfang, in dem das Kohlendioxid aus dem Kühlwasser abgezogen wird, ist von verschiedenen Umständen abhängig und kann nur schwer kontrolliert werden.

Aufgabe der vorliegenden Erfindung ist daher, ein Verfahren zum Verhindern von Kalk- und sonstigen Ablagerungen in Kühlkreisläufen unter Einsatz von Kohlendioxid zu schaffen, bei der der pH-Wert im gesamten Kühlwasserkreislauf auf einen Wert gehalten wird, bei dem die Bildung alkalischer Ablagerungen ebenso zuverlässig vermieden wird wie die Korrosion von Leitungsabschnitten.

Diese Aufgabe ist erfindungsgemäß dadurch gelöst, dass im Kühlwasserkreislauf, stromauf zur Zuführung des Kohlendioxids, der pH-Wert des Kühlwassers an einer zweiten Messstelle erfasst und in Abhängigkeit von der Differenz zwischen dem an der zweiten Messstelle erfassten pH-Wert und einem vorgegebenen zweiten Sollwert dem Kühlwasser eine mineralische Säure zugeführt wird, wobei die Regelungen der Zugabe von Kohlendioxid und der Mineralsäure unabhängig voneinander erfolgen.

Erfindungsgemäß erfolgt also eine zweifache Messung des pH-Werts innerhalb des Kühlwasserkreislaufs an unterschiedlichen Messstellen, die jeweils unabhängig voneinander als Ausgangsgröße zur Regelung eines pH-Werts im Kühlwasserkreislauf herangezogen werden. Durch die Zugabe der Mineralsäure wird der pH-Wert des Kühlwassers im gesamten Kühlwasserkreislauf gesenkt, die Zugabe des Kohlendioxids sorgt für eine Optimierung des pH-Werts in den Leitungsabschnitten des Kühlwasserkreislaufs stromauf zum Kühlturm. Da die im Kühlwasser enthaltene Mineralsäure nicht, wie das Kohlendioxid, dem Strippprozess im Kühlturm unterworfen ist sorgt sie für eine weitgehend gleichmäßige Erniedrigung des pH-Werts im Kühlwasser im gesamten Kühlwasserkreislauf; insbesondere sorgt sie im Bereich der Kühlturmpackung für einen pH-Wert, bei dem sowohl die Bildung von Ablagerungen in diesem Bereich als auch Korrosionsvorgänge weitmöglich vermieden werden.

Durch die voneinander unabhängigen Regelungen der Zugabe von Kohlendioxid und einer Mineralsäure wird der pH-Wert im gesamten Kühlwasserkreislauf innerhalb eines Bereiches gehalten, in dem einerseits die Bildung von Kalk- und sonstigen Ablagerungen, wie beispielsweise Ablagerungen aus Calciumsulfat, Calciumphosphat, Magnesiumhydroxid, Magnesiumsilikat, Magnesiumkarbonat oder Eisen- oder Siliziumverbindungen, als auch andererseits die Gefahr von Korrosion minimiert wird. Durch die Regelung des pH-Werts mittels der Zugabe mineralischer Säure wird insbesondere die Gefahr der Entstehung von Ablagerungen im Bereich der Kühlturmpackung infolge des "CO₂-Strippings" verhindert. Dabei ist es unwesentlich, an welcher Stelle im Kühlwasserkreislauf die mineralische Säure zugeführt wird, insbesondere ist es nicht erforderlich, die mineralische Säure direkt in das Auffangbecken oder in das dem Kühlwasserkreislauf zugeführte Frischwasser einzuleiten. Da sich die mineralische Säure im gesamten Kühlwasserkreislauf verteilt, wird der pH-Wert im gesamten System zumindest auf den pH-Wert des zweiten Sollwerts abgesenkt. Die weitere Absenkung des pH-Wertes durch die Zuführung von Kohlendioxid sichert das System zusätzlich gegen die Gefahr der Bildung von Ablagerungen ab, insbesondere in den Abschnitten stromab zum Prozesswärmetauscher, in denen das Kühlwasser mit erhöhter Temperaturen gefördert wird.

Eine vorteilhafte Weiterbildung der Erfindung sieht vor, dass der zweite Sollwert des pH-Werts höher als der erste Sollwert des pH-Wertes des Kühlwassers ist. Durch die Zugabe der Mineralsäure wird der pH-Wert des Kühlwassers auf einen Bereich von beispielsweise pH < 8,3 gebracht, bei dem die Entstehung der genannten Ablagerungen bereits weitgehend unterdrückt wird. Durch die Zugabe des Kohlendioxid wird der pH-Wert des Kühlwassers weiter optimiert, insbesondere wird dadurch der Verschiebung des optimalen pH-Wertes durch die Temperaturerhöhung im Prozesswärmetauscher Rechnung getragen. Die zweite Messstelle für den pH-Wert liegt stromauf zur Einspeisestelle für das Kohlendioxid und stromab zum Kühlturm; bevorzugt liegt sie im Bereich des Auffangbeckens. Der erste Sollwert wird so gewählt, dass einerseits Ablagerungen und andererseits Korrosionserscheinungen an den Leitungen aufgrund des Kohlendioxideintrags auf ein Minimum reduziert werden.

Bevorzugt wird als erster Sollwert für den pH-Wert im Kühlwasser der Wert pH ≥ 7,0, besonders bevorzugt der Wert pH ≥ 7,5 gewählt. Gleichzeitig sollte er jedoch einen maximalen Wert nicht überschreiten, um zu gewährleisten, dass die Bildung von Ablagerungen im Bereich bereits oberhalb der Einspeisestelle für das Kohlendioxid in den Kühlwasserkreislauf weitgehend unterdrückt wird. Der zweite Sollwert sollte höher als der erste Sollwert gewählt werden und dabei einen bestimmten maximalen Wert nicht übersteigen, der von den chemischen und physikalischen Eigenschaften des Kühlwassers abhängt und davon, ob und in welchem Umfang weitere Chemikalien wie z.B. Antiscalents oder Korrosionsinhibitoren in das Kühlwasser eindosiert werden. Beispielsweise liegt dieser maximale Wert zwischen pH=8,0 und pH=8,3.

Eine abermals vorteilhafte Ausgestaltung der Erfindung ist dadurch gekennzeichnet, dass chemische oder physikalische Parameter des Kühlwassers gemessen und zur Bestimmung des ersten Sollwerts oder des zweiten Sollwerts herangezogen werden. Als "chemische Parameter" sollen hier insbesondere Eigenschaften über gelöste Bestandteile des Wassers verstanden werden, wie beispielsweise die Summe der gelösten Salze (TDS) im Kühlwasser, die Konzentration bestimmter Ionen, wie Ca²⁺, PO₄³⁺, SO₃²⁻, Si04, Polymere, etc oder der Alkanilität des Kühlwassers. Als "physikalische Parameter" sollen physikalische Eigenschaften, wie beispielsweise die Temperatur des Kühlwassers an verschiedenen Punkten im Kühlwasserkreislauf oder der Umgebungsdruck verstanden werden. In Abhängigkeit der gemessenen chemischen und physikalischen Parametern wird dann ein Sollwert für den pH-Wert oder ein pH - Wertebereich bestimmt, der bei den jeweiligen Verhältnissen zur geringst möglichen Neigung der Bildung von Ablagerungen einerseits und der Entstehung von Korrosionen an den Leitungen im Kühlwasserkreislauf andererseits führt. Zur Berechnung des Sollwertes können auch Erfassungs- und Auswertesysteme verwendet werden, wie sie von verschiedenen Herstellern angeboten werden, zum Beispiel das von der Firma Nalco unter der Bezeichnung "3D TRASAR^{®}" vertriebene System. Insbesondere können die gemessenen chemischen oder physikalischen Parameter auch dazu genutzt werden, um Härteindices, wie beispielsweise den Langelier - Sättigungsindex (LSI) oder den Ryznar - Stabilitätsindex (RSI) zu bestimmen und hieraus den Sollwert für den pH-Wert zu berechnen. Im Falle des Langelier Sättigungsindex wird der pH-Wert an der ersten Messstelle beispielsweise so eingestellt, dass eine der folgenden Ungleichungen erfüllt ist:
- 0,3 < LSI <0,3, falls dem Kühlwasser keine Antiscalents zugeführt werden,
- 0,3 < LSI< 1,5, falls dem Kühlwasser Antiscalents zugeführt werden.

Bei den einschlägigen Methoden für die Bestimmung eines Sollwertes werden aber auch die Löslichkeiten anderer Stoffe, beispielsweise Kalziumsulfat, Kalziumphosphat, Magnesiumhydroxid, Silica, oder Magnesiumsilicat sowie die Korrosionsrisiken der verwendeten Werkstoffe im Kühlkreislauf berücksichtigt.

Die Zuführung des Kohlendioxids erfolgt erfindungsgemäß im Kühlwasserkreislauf stromauf zum Prozesswärmetauscher, jedoch stromab zum Kühlturm. Damit soll insbesondere der Gefahr begegnet werden, dass es bei der Erwärmung des Kühlwassers während des Durchlaufs durch den Prozesswärmetauscher zu einem Ausfällen von Salzen und damit zur Bildung von Ablagerungen im Prozesswärmetauscher oder den stromab zu diesem verlaufenden Leitungsabschnitten des Kühlwasserkreislaufs kommt. Beispielsweise erfolgt die Zuführung direkt im Auffangbecken oder in einem Leitungsabschnitt stromab zum Auffangbecken. Um eine klare Trennung der beiden Regelkreisläufe von Kohlendioxid und Mineralsäure zu gewährleisten, ist es vorteilhaft, freilich nicht zwingend erforderlich, das Kühlendioxid stromab zu einer im Kühlwasserkreislauf angeordneten Pumpe zuzuführen, während die Zuführung der Mineralsäure stromauf zu dieser Pumpe erfolgt.

Erfindungsgemäß erfolgt die Erfassung des pH-Werts an der ersten Messstelle im Kühlwasserkreislauf stromab zum Prozesswärmetauscher, jedoch stromauf zum Kühlturm. Damit wird bei der Regelung der Kohlendioxidzufuhr der Veränderung der Wassertemperatur nach Durchlaufen des Prozesswärmetauschers Rechnung getragen.

Das erfindungsgemäße Verfahren kann mit oder ohne die Zuführung weiterer Chemikalien in das Kühlwasser erfolgen, wie beispielsweise Antiscalents auf Polymerbasis oder Korrosionsinhibitoren.

Bevorzugt wird das Kohlendioxid dem Kühlwasser unter Druck im verflüssigten Zustand zugeführt und beim Eintragen in das Kühlwasser entspannt, wodurch es zu einem effizienten Einlösen des Kohlendioxids in das Kühlwasser kommt. Alternativ oder ergänzend dazu kann das Kohlendioxid jedoch auch in Gasform in das Kühlwasser eingetragen werden.

Zweckmäßigerweise wird das Kohlendioxid aus einem Tank für flüssiges oder gasförmiges Kohlendioxid, einer Flasche oder einer Kohlendioxidleitung entnommen, an die der Kühlwasserkreislauf angeschlossen ist. Besonders vorteilhaft ist die Nutzung von Kohlendioxid aus Abgas.

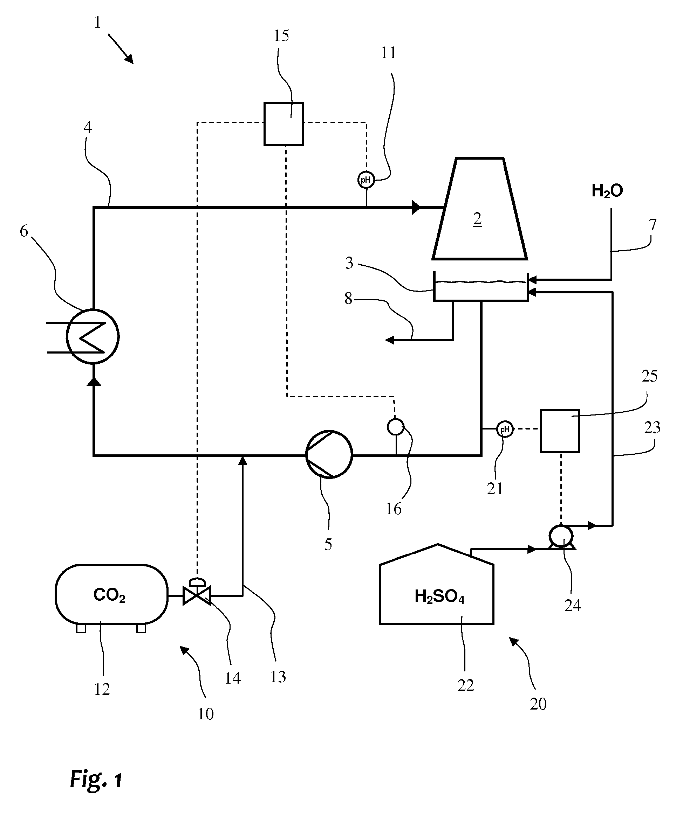

Anhand der Zeichnung soll ein Ausführungsbeispiel der Erfindung näher erläutert werden. Die einzige Zeichnung (Fig. 1) zeigt schematisch einen erfindungsgemäß arbeitenden Kühlwasserkreislauf.

Der in Fig. 1 gezeigte Kühlwasserkreislauf 1 umfasst einen Kühlturm 2 mit Auffangbecken 3, das zur Aufnahme des aus dem Kühlturm 2 abtropfenden Kühlwassers bestimmt ist. In eine vom Auffangbecken 3 ausgehende und in den Kühlturm 2 einmündende Kreislaufleitung 4 ist eine Pumpe 5 sowie ein Prozesswärmetauscher 6 integriert. Beim Prozesswärmetauscher 6 handelt es sich beispielsweise um einen einzelnen Wärmetauscher oder um ein System von mehreren parallel oder in Serie geschalteten Wärmetauschern, in dem das in der Kreislaufleitung geführte Kühlwasser in Wärmetausch mit einem Prozessmedium tritt und dabei erwärmt wird. In das Auffangbecken 3 mündet des Weiteren eine Frischwasserzuleitung 7 sowie eine Abflutleitung 8 ein. Über die Abflutleitung 8 wird ein Teil des Kühlwassers abgezogen, um ein zu starkes Aufkonzentrieren von Salzen im Kühlwasser zu vermeiden. Die Frischwasserzuleitung 7 dient zum Ersatz vom Kühlwasser, das beim Kühlprozess im Kühlturm 2 in die Umgebungsatmosphäre abgeführt oder durch Entzug über die Abflutleitung 8 aus dem Kühlwasserkreislauf 1 entnommen wurde.

In dem in Fig. 1 gezeigten Kühlwasserkreislauf 1 erfolgt an zwei unterschiedlichen Stellen eine Regelung des pH-Werts des Kühlwassers. Ein erster Regelkreis 10 umfasst eine erste Messstelle 11 zum Erfassen des pH-Werts, die stromauf zum Kühlturm 2, im Ausführungsbeispiel unmittelbar vor der Einmündung der Kreislaufleitung 4 in den Kühlturm 2 angeordnet ist. Die im Ausführungsbeispiel gezeigte Anordnung der Messstelle 11 stromab zum Prozesswärmetauscher 6 ist eine im Rahmen der Erfindung vorteilhafte, jedoch nicht zwingend erforderliche Lösung. Der erste Regelkreis 10 umfasst des Weiteren eine an einen Tank 12 für Kohlendioxid angeschlossene Kohlendioxidzuleitung 13, die mit einem elektronisch ansteuerbaren Regelventil 14 ausgerüstet ist. Die Kohlendioxidzuleitung 13 mündet stromab zum Auffangbecken 3 und zur Pumpe 5, jedoch stromauf zum Prozesswärmetauscher 6, in die Kreislaufleitung 4 ein. Das Regelventil 14 und die Messstelle 11 stehen mit einer elektronischen Steuereinheit 15 in Datenverbindung, die die Regelung des pH-Werts des Kühlwassers durch Zugabe von Kohlendioxid in Abhängigkeit vom an der Messstelle 11 gemessenen pH - Wert nach einem gespeicherten Programm erlaubt. Optional steht die Steuereinheit 15 mit einer weiteren Messstelle 16 in Datenverbindung. Die Messstelle 16 umfasst eine oder mehrere Sonden, mittels der solche Eigenschaften des Kühlwassers erfasst werden, die für die Bildung von Ablagerungen oder für die Korrosivität von Bedeutung sind, beispielsweise die Temperatur, die Konzentration bestimmter im Wasser gelöster Stoffe, wie CaCO₃,CaSO₄, Ca₃(PO₄)₂, Mg(OH)₂, den TDS (Summe gelöster Salze), etc.. Mittels geeigneter und dem Fachmann geläufiger Berechnungsmethoden können die Messwerte solcher Eigenschaften zur Bestimmung eines pH - Sollwerts eingesetzt werden, der in Bezug auf eine möglichst geringe Neigung zur Bildung von Ablagerungen bzw. von Korrosion an Leitungen des Kühlwasserkreislaufs 1 ein Optimum darstellt.

Ein zweiter Regekreis 20, der stromauf zum Regelkreis 10 im Kühlwasserkreislauf 1 angeordnet ist, umfasst eine zweite Messstelle 21 zur Erfassung des pH-Werts im Kühlwasser. Die zweite Messstelle 21 ist stromauf zur Einmündung der Kühlendioxidleitung 13 an der Kreislaufleitung 4 und zur Pumpe 5 angeordnet. Der zweite Regelkreis 20 umfasst des Weiteren einen Vorratsbehälter 22 für eine mineralische Säure, im Ausführungsbeispiel Schwefelsäure. Vom Vorratsbehälter 22 geht eine Mineralsäurezuleitung 23 aus, die in den Kühlwasserkreislauf 1 einmündet. Im Ausführungsbeispiel mündet die Mineralsäurezuleitung 23 parallel zur Frischwasserzuleitung 7 in das Auffangbecken 3 ein, jedoch kann die Mineralsäureleitung an einer beliebigen anderen Stelle in die Kreislaufleitung 4 einmünden. In der Mineralsäurezuleitung 23 ist eine Fördereinrichtung 24 integriert, die mit einem elektronisch ansteuerbaren Motor ausgerüstet ist. Der Motor der Fördereinrichtung 24 und die Messstelle 21 stehen mit einer elektronischen Steuereinheit 25 in Datenverbindung, die die Regelung des pH-Werts des Kühlwassers durch Zugabe von Mineralsäure in Abhängigkeit vom gemessenen pH-Wert nach einem gespeicherten Programm erlaubt.

Beim Betrieb des Kühlwasserkreislaufs 1 erfolgt im Regelkreis 10 eine Regelung des an der Messstelle 11 erfassten pH-Werts auf einen vorgegebenen Sollwert. Dabei wird der pH-Wert an der Messstelle 11 kontinuierlich oder in regelmäßigen Zeitabständen erfasst und der Steuereinheit 15 zugeleitet. In der Steuereinheit 15 ist ein Sollwert für den pH-Wert (im Folgenden auch "erster Sollwert" genannt) eingespeichert, der so gewählt ist, dass einerseits in Abhängigkeit von den im Kühlwasser bestehenden Verhältnissen eine möglichst geringe Neigung zur Bildung von Kalk- und sonstigen Ablagerungen besteht, andererseits keine durch die Säure verursachten Korrosionen an den Leitungen des Kühlwasserkreislaufs 1 auftritt. Alternativ zu einem fest vorgegebenen Sollwert kann der erste Sollwert auch in einer dem Fachmann geläufigen Weise laufend berechnet werden, wobei dazu die an Messstelle 16 gemessenen Parameter einbezogen werden. Entsprechend der Differenz zwischen dem an der Messstelle 11 gemessenen pH-Wert und dem ersten Sollwert gibt die Steuereinheit 15 ein Signal an das Regelventil 14, um Kohlendioxid aus dem Tank 12 in die Kreislaufleitung einzuspeisen oder die Kohlendioxidzufuhr zu sperren.

Im Regelkreis 20 erfolgt eine weitere Regelung des pH-Werts im Kühlwasser. Dazu wird der pH-Wert an der Messstelle 21 kontinuierlich oder in vorgegebene Zeitabständen erfasst und der Steuereinheit 25 zugeleitet. In der Steuereinheit ist ein Sollwert für den pH-Wert (im Folgenden auch "zweiter Sollwert" genannt) eingespeichert. In Abhängigkeit von der Differenz zwischen dem zweiten Sollwert und dem an der Messstelle 21 erfassten pH-Wert gibt die Steuereinheit 25 ein entsprechendes Steuersignal an die Fördereinrichtung 24 ab, um dem Kühlwasserkreislauf 1 Mineralsäure aus dem Vorratsbehälter 22 zuzuführen oder die Zuführung von Mineralsäure zu sperren. Der pH-Sollwert des Regelkreises 20 ist dabei stets höher als der Sollwert des Regelkreises 10 und bevorzugt so gewählt, dass für den ersten Sollwert in Regelkreis 10 ein Wert von pH ≥ 7,0, bevorzugt pH ≥ 7,5 gewählt werden kann. Beispielsweise beträgt der zweite Sollwert zwischen pH = 7,8 und pH = 8,3 und der erste Sollwert pH = 7,6.

Da das über die Kohlendioxidzuleitung 13 dem Kühlwasser zugeführte Kohlendioxid beim Durchlaufen des Kühlturms 2 zumindest teilweise wieder aus dem Kühlwasser entweicht und das vom Kühlturm 2 in das Auffangbecken 3 eintropfende Kühlwasser insofern einen höheren pH-Wert besitzt als das dem Kühlturm 2 zugeführte Kühlwasser, wird durch die Zugabe der Mineralsäure insbesondere erreicht, dass der pH-Wert im Kühlturm 2auf einen Wert abgesenkt wird, bei dem die Bildung von Ablagerungen in der Kühlturmpackung zumindest weitgehend vermieden wird.

Mit dem erfindungsgemäßen Verfahren werden sowohl die Ausbildung von Kalk- und sonstigen Ablagerungen wie auch Korrosion im Leitungssystem vermieden und die Verluste an Kohlendioxid im Kühlturm deutlich reduziert. Gleichzeitig werden die bekannten Vorteile von CO₂ als Mittel zur Regulierung des pH-Werts genutzt.

### Bezugszeichenliste

- 1: Kühlwasserkreislauf
- 2: Kühlturm
- 3: Auffangbecken
- 4: Kreislaufleitung
- 5: Pumpe
- 6: Wärmetauscher
- 7: Frischewasserzuleitung
- 8: Abflutleitung
- 9: -
- 10: Regelkreis
- 11: Messstelle
- 12: Tank
- 13: Kohlendioxidzuleitung
- 14: Regelventil
- 15: Steuereinheit
- 16: Messstelle
- 17: -
- 18: -
- 19: -
- 20: Regelkreis
- 21: Messstelle
- 22: Vorratsbehälter
- 23: Mineralsäurezuleitung
- 24: Fördereinrichtung
- 25: Steuereinheit

## Patentansprüche

1. Verfahren zum Vermeiden von Ablagerungen in offenen Kühlwasserkreisläufen, bei denen Kühlwasser aus einem Prozesswärmetauscher (6) einem Kühlturm (2) zugeführt, dort in Kontakt mit Umgebungsluft gekühlt wird und in ein Auffangbecken (3) abtropft und anschließend dem Prozesswärmetauscher (6) wieder zugeführt wird, wobei der pH-Wert des Kühlwassers laufend oder in regelmäßigen Zeitabständen an einer ersten Messstelle (11) erfasst und in Abhängigkeit von der Differenz zwischen dem an der ersten Messstelle (11) erfassten pH-Wert und einem vorgegebenen ersten Sollwert dem Kühlwasser Kohlendioxid zugeführt wird,
wobei die Zuführung des Kohlendioxids stromauf zum Prozesswärmetauscher (6), jedoch stromab zum Kühlturm (2) und die Erfassung des pH-Werts an der ersten Messstelle (11) stromab zum Prozesswärmetauscher (6), jedoch stromauf zum Kühlturm (2) erfolgt,
**dadurch gekennzeichnet,**
**dass** im Kühlwasserkreislauf, stromauf zur Zuführung des Kohlendioxids und stromab zum Kühlturm (2) der pH-Wert des Kühlwassers an einer zweiten Messstelle (21) erfasst und in Abhängigkeit von der Differenz zwischen dem an der zweiten Messstelle (21) erfassten pH-Wert und einem vorgegebenen zweiten Sollwert dem Kühlwasser eine mineralische Säure zugeführt wird, wobei die Regelungen der Zugabe von Kohlendioxid und der Mineralsäure unabhängig voneinander verlaufen.

2. Verfahren nach Anspruch 1, **dadurch gekennzeichnet, dass** der zweite Sollwert des pH-Werts größer als der erste Sollwert des pH-Wertes des Kühlwassers ist.

3. Verfahren nach Anspruch 1 oder 2, **dadurch gekennzeichnet, dass** als erster Sollwert für den pH-Wert im Kühlwasser pH > 7,0, bevorzugt pH > 7,5 gewählt wird.

4. Verfahren nach einem der vorhergehenden Ansprüche, **dadurch gekennzeichnet, dass** chemische oder physikalische Parameter des Kühlwassers gemessen und zur Bestimmung des ersten Sollwerts oder des zweiten Sollwerts herangezogen werden.

5. Verfahren nach einem der vorhergehenden Ansprüche, **dadurch gekennzeichnet, dass** dem Kühlwasser zusätzlich weitere Chemikalien, wie Antiscalents oder Korrosionsinhibitoren, zugeführt werden.

6. Verfahren nach einem der vorhergehenden Ansprüche, **dadurch gekennzeichnet, dass** das Kohlendioxid dem Kühlwasser flüssig oder gasförmig zugeführt wird.

7. Verfahren nach einem der vorhergehenden Ansprüche, **dadurch gekennzeichnet, dass** das Kohlendioxid aus einem Tank , einer Flasche, einer Kohlendioxidleitung oder einer Abgasquelle entnommen wird.

## Claims

1. Method for preventing deposits in open cooling water circuits, in which cooling water is fed from a process heat exchanger (6) to a cooling tower (2), cooled there in contact with ambient air and drained into a collecting tank (3) and then fed back to the process heat exchanger (6), wherein the pH of the cooling water is recorded continuously or at regular time intervals at a first measuring site (11) and, depending on the difference between the pH recorded at the first measuring site (11) and a predetermined first target value, carbon dioxide is fed to the cooling water,
wherein the carbon dioxide is fed upstream of the process heat exchanger (6), but downstream of the cooling tower (2), and the pH is recorded at the first measuring site (11) downstream of the process heat exchanger (6), but upstream of the cooling tower (2),
**characterized in that**
in the cooling water circuit, upstream of the feed of the carbon dioxide and downstream of the cooling tower (2), the pH of the cooling water is recorded at a second measuring site (21) and, depending on the difference between the pH recorded at the second measuring site (21) and a predetermined second target value, a mineral acid is fed to the cooling water, wherein the controls of the addition of carbon dioxide and of the mineral acid proceed independently of one another.

2. Method according to Claim 1, **characterized in that** the second target value of the pH is greater than the first target value of the pH of the cooling water.

3. Method according to Claim 1 or 2, **characterized in that**, as first target value for the pH in the cooling water, pH > 7.0, preferably pH > 7.5 is chosen.

4. Method according to any one of the preceding claims, **characterized in that** chemical or physical parameters of the cooling water are measured and used for determining the first target value or the second target value.

5. Method according to any one of the preceding claims, **characterized in that** further chemicals, such as antiscalants or corrosion inhibitors, are additionally fed to the cooling water.

6. Method according to any one of the preceding claims, **characterized in that** the carbon dioxide is fed to the cooling water in the liquid or gaseous state.

7. Method according to any one of the preceding claims, **characterized in that** the carbon dioxide is withdrawn from a tank, a cylinder, a carbon dioxide line or an off-gas source.

## Revendications

1. Procédé destiné à éviter les dépôts dans les circuits d'eau de refroidissement ouverts, dans lesquels de l'eau de refroidissement issue d'un échangeur de chaleur de procédé (6) est introduite dans une tour de refroidissement (2), y est refroidie en contact avec l'air ambiant et est égouttée dans un bassin de rétention (3), puis réintroduite dans l'échangeur de chaleur de procédé (6), le pH de l'eau de refroidissement étant déterminé en continu ou à intervalles de temps réguliers à un premier emplacement de mesure (11) et du dioxyde de carbone étant ajouté à l'eau de refroidissement en fonction de la différence entre le pH déterminé au premier emplacement de mesure (11) et une première valeur de consigne prédéterminée, l'introduction du dioxyde de carbone ayant lieu en amont de l'échangeur de chaleur de procédé (6), mais toutefois en aval de la tour de refroidissement (2), et la détermination du pH au premier emplacement de mesure (11) ayant lieu en aval de l'échangeur de chaleur de procédé (6), mais toutefois en amont de la tour de refroidissement (2),
**caractérisé en ce que**
le pH de l'eau de refroidissement est déterminé à un second emplacement de mesure (21) dans le circuit d'eau de refroidissement, en amont de l'introduction de dioxyde de carbone et en aval de la tour de refroidissement (2), et un acide minéral est ajouté à l'eau de refroidissement en fonction de la différence entre le pH déterminé au second emplacement de mesure (21) et une seconde valeur de consigne prédéterminée, les régulations de l'ajout de dioxyde de carbone et de l'acide minéral étant indépendantes l'une de l'autre.

2. Procédé selon la revendication 1, **caractérisé en ce que** la seconde valeur de consigne du pH est supérieure à la première valeur de consigne du pH de l'eau de refroidissement.

3. Procédé selon la revendication 1 ou 2, **caractérisé en ce qu'**un pH > 7,0, de préférence un pH > 7,5, est choisi en tant que première valeur de consigne pour le pH dans l'eau de refroidissement.

4. Procédé selon l'une quelconque des revendications précédentes, **caractérisé en ce que** des paramètres chimiques ou physiques de l'eau de refroidissement sont mesurés et utilisés pour déterminer la première valeur de consigne ou la seconde valeur de consigne.

5. Procédé selon l'une quelconque des revendications précédentes, **caractérisé en ce que** d'autres produits chimiques, tels que des inhibiteurs d'entartrage ou des inhibiteurs de corrosion, sont en outre ajoutés à l'eau de refroidissement.

6. Procédé selon l'une quelconque des revendications précédentes, **caractérisé en ce que** le dioxyde de carbone est ajouté à l'eau de refroidissement sous forme liquide ou gazeuse.

7. Procédé selon l'une quelconque des revendications précédentes, **caractérisé en ce que** le dioxyde de carbone est soutiré d'un réservoir, d'une bouteille, d'une conduite de dioxyde de carbone ou d'une source de gaz d'échappement.
